# EUROPÄISCHE PATENTANMELDUNG

(11) **EP 3 928 635 A1**
(43) Veröffentlichungstag der Anmeldung: **29.12.2021**
(21) Anmeldenummer: 21170748.4
(22) Anmeldetag: 27.04.2021
(51) Int. Cl.: A23L 7/109, A21D 10/00, A21D 8/02, A21D 13/04

(54) **VERFAHREN UND ZUSAMMENSETZUNG ZUM HERSTELLEN VON TEIGWAREN**

(30) Priorität: 26.06.2020 AT 6720 U; 21.10.2020 AT 5020620 U
(71) Anmelder: MVK Beteiligungs GmbH, 8083 St. Stefan im Rosental (AT)
(72) Erfinder: Kaufmann, Viktor, 8083 St. Stefan im Rosental (AT)
(74) Vertreter: Wirnsberger & Lerchbaum Patentanwälte OG

(57) **Zusammenfassung**

Die Erfindung betrifft ein Verfahren zum Herstellen von Teigwaren. Dabei ist erfindungsgemäß vorgesehen, dass höchstens 68 Gew.-% eines, bevorzugt kohlehydratreichen, Pflanzensamenmehles, insbesondere Getreidemehles, und zumindest 32 Gew.-% eines eiweißreichen zweiten Pflanzensamenmehles, bezogen auf gesamt 100 Gew.-% dieser Bestandteile, sowie optional weitere Bestandteile zur Bildung eines Teiges vermischt werden.

Weiter betrifft die Erfindung eine Zusammensetzung und deren Verwendung zum Herstellen von Teigwaren.

## Beschreibung

Die Erfindung betrifft ein Verfahren zum Herstellen von Teigwaren sowie eine Zusammensetzung und deren Verwendung.

Aus dem Stand der Technik sind eine Vielzahl von Teigwaren bekannt. Die wohl bekannteste und in herkömmlicher Zusammensetzung mit weißer bis gelber Farbe gekennzeichnete Teigware ist die italienische Nudel. Bei der Formgebung sind der Fantasie kaum Grenzen gesetzt, wobei die gängigsten Formen als Spaghetti, Tagliatelle, Fusilli oder Lasagne bezeichnet werden. Ein Teig zur Herstellung solcher Nudeln wird in herkömmlicher Weise lediglich aus Wasser, Salz und Hartweizengrieß bzw. Weizenmehl angerührt. Diesem Teig werden oftmals auch Eier beigemengt, um sowohl eine gelbe Farbe zu intensivieren als auch einen Geschmack zu verändern. Darüber hinaus können dem Teig auch andere Zusatzstoffe beigemengt werden.

Aufgrund eines nicht unerheblichen Glutengehalts von Weizen können aus diesem hergestellte Nudeln von Menschen mit Glutenunverträglichkeit nicht konsumiert werden. Hiervon sind auch weit verbreitete Nudelvarianten aus Dinkel oder Roggen betroffen. Zudem können derartige Nudeln, welche Eier enthalten, von Menschen mit veganer Lebens- und Ernährungsform nicht konsumiert werden. In jedem Fall aber entfällt, unabhängig von einer Beimengung von Eiern, nahezu der gesamte Brennwert solcher Nudeln auf Kohlehydrate.

Um einen nachteilig hohen Kohlehydratanteil von Nudeln zu reduzieren, haben sich vor allem im Laufe der letzten Jahrzehnte alternative Zusammensetzungen etabliert. Dabei wurde festgestellt, dass durch den Einsatz von Hülsenfrüchten besonders proteinreiche Nudeln erhalten werden können. Hierzu werden die Hülsenfrüchte, wie beispielsweise Soja, Kichererbsen, schwarze Bohnen oder rote Linsen, entwässert und zu Mehl vermahlen. Dieses Mehl wird mit Wasser und Stabilisierungsmitteln und/oder Verdickungsmitteln vermengt, sodass ein Teig entsteht, aus welchem Nudeln geformt werden können. Abhängig von einem zur Mehlerzeugung verwendetem Rohmaterial können derartige Nudeln einen mitunter sehr hohen Proteinanteil aufweisen. Allerdings kann durch das eingesetzte Rohmaterial ein starker Eigengeschmack der Nudeln entstehen, wodurch ein Geschmacksempfinden des Konsumenten stark von jenem der herkömmlichen Nudeln abweicht. Zudem sind derartige Nudeln im Erscheinungsbild stark von der Farbgebung der Rohmaterialien abhängig und zumeist gänzlich anders gefärbt als herkömmliche Nudeln.

Aufgabe der Erfindung ist es, ein Verfahren zur Herstellung von Teigwaren anzugeben, bei welchem sich eine Erscheinungsform und ein Geschmack der Teigware nur unwesentlich von herkömmlichen Teigwaren unterscheidet, jedoch ein Kohlehydratanteil reduziert und ein Eiweißanteil gleichzeitig erhöht ist.

Weiter ist es Aufgabe der Erfindung, eine Zusammensetzung zur Herstellung von Teigwaren anzugeben, welche auf einfache Weise zu einem Teig verarbeitbar ist und im Vergleich zu herkömmlichen Zusammensetzungen einen erhöhten Eiweißanteil sowie einen reduzierten Kohlehydratanteil aufweist.

Zudem ist es Aufgabe der Erfindung, eine Verwendung einer derartigen Zusammensetzung anzugeben.

Die verfahrensmäßige Aufgabe wird erfindungsgemäß dadurch gelöst, dass bei einem Verfahren der eingangs genannten Art höchstens 68 Gewichtsprozent (im Folgenden: Gew.-%) eines, bevorzugt kohlehydratreichen, ersten Pflanzensamenmehles, insbesondere Getreidemehles, und zumindest 32 Gew.-% eines eiweißreichen Pflanzensamenmehles, bezogen auf gesamt 100 Gew.-% dieser Bestandteile, sowie optional weitere Bestandteile zur Bildung eines Teiges vermischt werden.

Dabei kann auf herkömmliche Anlagen zur Herstellung von Teigwaren zurückgegriffen und analog zur konventionellen Teigwarenproduktion, insbesondere der Nudelproduktion, vorgegangen werden. Demnach werden erstes Pflanzensamenmehl, insbesondere Getreidemehl, und zweites Pflanzensamenmehl vermischt und weitere Bestandteile zugegeben, sodass durch Kneten ein Teig erzeugt werden kann. Der Teig wird in weiterer Folge in Form gebracht, wobei dieser Vorgang mittels Extrusion, Schneiden oder Walzen stattfinden kann, sodass geformte Teigwaren, insbesondere Nudeln, erhalten werden.

Damit diese Teigwaren einen gegenüber herkömmlichen Teigwaren reduzierten Kohlehydratanteil und einen gleichzeitig erhöhten Eiweißanteil aufweisen, ist erfindungsgemäß vorgesehen, den Anteil des ersten, bevorzugt kohlehydratreichen, Pflanzensamenmehles, insbesondere Getreidemehles, in der Teigware auf höchstens 68 Gew.-% zu begrenzen. Folglich beträgt der Anteil des zweiten eiweißreichen Pflanzensamenmehles an der Mischung zumindest 32 Gew.-%, wobei mit eiweißreich gemeint ist, dass der Eiweißanteil des zweiten Pflanzensamenmehles größer als dessen Kohlehydratanteil ist. Im Gegensatz hierzu, kann der Kohlehydratanteil des ersten Pflanzensamenmehles vorzugsweise größer als dessen Eiweißanteil sein, sodass dieses als kohlehydratreich bezeichnet werden kann. In der Regel liegen dem zweiten Pflanzensamenmehl und dem ersten Pflanzensamenmehl, insbesondere Getreidemehl, unterschiedliche Pflanzensamen zugrunde. Dabei weist das zweite Pflanzensamenmehl, insbesondere eines auf Basis von Kürbiskernen und/oder Hanfsamen, gleichzeitig einen geringen Kohlehydratanteil und einen hohen Eiweißanteil auf. Das erste Pflanzensamenmehl, insbesondere Getreidemehl, weist für gewöhnlich einen niedrigen Eiweißanteil und einen hohen Kohlehydratanteil auf. Entsprechend ist durch ein derartiges Mischungsverhältnis die Möglichkeit eröffnet, dass die erhaltenen Teigwaren die in der Verordnung (EG) Nr. 1924/2006 festgelegten Parameter erreichen können. Ist dies der Fall, dürfen diese als "kohlehydratreduziert" und mit "hoher Proteingehalt" bezeichnet werden, wobei unter Protein und Eiweiß das gleiche verstanden wird.

Allgemein kann festgehalten werden, dass Lebensmittel nur dann als "kohlehydratreduziert" und mit "hoher Proteingehalt" bezeichnet werden dürfen, wenn die in der Verordnung (EG) Nr. 1924/2006 festgelegten Parameter eingehalten werden:

### REDUZIERTER [NAME DES NÄHRSTOFFS]-ANTEIL

Die Angabe, der Gehalt an einem oder mehreren Nährstoffen sei reduziert worden, sowie jegliche Angabe, die für den Verbraucher voraussichtlich dieselbe Bedeutung hat, ist nur zulässig, wenn die Reduzierung des Anteils mindestens 30 % gegenüber einem vergleichbaren Produkt ausmacht; ausgenommen sind Mikronährstoffe, für die ein 10%iger Unterschied im Nährstoffbezugswert gemäß der Richtlinie 90/496/EWG akzeptabel ist, sowie Natrium oder der entsprechende Gehalt an Salz, für das ein 25%iger Unterschied akzeptabel ist.

### HOHER PROTEINGEHALT

Die Angabe, ein Lebensmittel habe einen hohen Proteingehalt, sowie jegliche Angabe, die für den Verbraucher voraussichtlich dieselbe Bedeutung hat, ist nur zulässig, wenn auf den Proteinanteil mindestens 20 % des gesamten Brennwerts des Lebensmittels entfallen.

Vorzugsweise sind zumindest beide Bestandteile in der Teigware vorhanden, sodass der Anteil des ersten Pflanzensamenmehles, insbesondere Getreidemehles, größer als 0 Gew.-% und der Anteil des zweiten Pflanzensamenmehles kleiner als 100 Gew.-% ist.

Zudem können zur Teigbildung auch weitere Bestandteile beigemengt werden. Dabei können sowohl feste Bestandteile wie Salz und/oder Zucker als auch flüssige Bestandteile wie Wasser, Milch oder Öl zum Einsatz kommen.

Durch eine homogene Beimengung des zweiten Pflanzensamenmehles zum ersten Pflanzensamenmehl, insbesondere Getreidemehl, können konzentrierte Regionen des zweiten Pflanzensamenmehles innerhalb der Teigware vermieden werden. Dadurch wird die Erscheinungsform einer derartigen Teigware nur in geringem Maße beeinflusst, weshalb die Erscheinungsform einer herkömmlichen Teigware, insbesondere einer Nudel, im Wesentlichen erhalten bleiben kann. Zudem wird auf diese Weise in der Regel nur eine geringfügige geschmackliche Abweichung von herkömmlicher Teigware hervorgerufen.

Mit Vorteil werden das erste Pflanzensamenmehl und das zweite Pflanzensamenmehl durch ein Vermahlen von, insbesondere teilentölten, Pflanzensamen hergestellt. Hierdurch können die beiden Pflanzensamenmehle beim Herstellen von Teigwaren besonders einfach mit anderen Bestandteilen vermischt werden. Abhängig von einer Sorte und/oder einer Art der Pflanzensamen können diese vor dem Vermahlen ausgepresst werden, um einen Ölgehalt zu reduzieren. Derart ausgepresste Pflanzensamen werden in der Regel als teilentölt bezeichnet. Zudem können die Pflanzensamen abhängig von Sorte und/oder Art vor einem Auspressen geröstet werden, um einen Feuchtigkeitsgehalt zu reduzieren. Unter dem Feuchtigkeitsgehalt von Pflanzensamen wird insbesondere ein Wassergehalt verstanden.

Bevorzugt werden das erste Pflanzensamenmehl und das zweite Pflanzensamenmehl aus unterschiedlichen Pflanzensamen hergestellt. Dadurch können Pflanzensamenmehle mit unterschiedlichen Nährstoffzusammensetzungen kombiniert werden, um die Nährstoffzusammensetzung der erhaltenen Teigwaren entsprechend anpassen zu können. In der Regel stammen die Pflanzensamen zum Herstellen des ersten Pflanzensamenmehles von einer anderen Pflanzensorte oder Pflanzenart als die Pflanzensamen zum Herstellen des zweiten Pflanzensamenmehles. Oftmals werden die Pflanzensamen auch als Früchte, Körner, Nüsse, Kerne, Saat oder Samen bezeichnet.

Vorzugsweise wird Getreidemehl als erstes Pflanzensamenmehl eingesetzt und durch ein Vermahlen von Körnerfrüchten, insbesondere jener von Süßgräsern, erhalten. Hierbei kann eine große Bandbreite von Körnerfrüchten zum Einsatz kommen, sodass die Nährstoffzusammensetzung des ersten Pflanzensamenmehles, insbesondere Getreidemehles, in Bezug auf Spurenelemente, Ballaststoffe, Proteine und/oder Kohlehydrate entsprechend der vorgesehenen Konsumentengruppe ausgewählt werden kann. Hierfür können nicht nur die Körnerfrüchte sogenannter echter Getreide, wie Weizen, Roggen, Dinkel, Gerste, Hafer, Teff, Reis, Mais, Hirse und Triticale, sondern auch jene sogenannter Pseudogetreide, wie Quinoa, Amarant und Buchweizen, zu erstem Pflanzensamenmehl, insbesondere Getreidemehl, vermahlen werden. Insbesondere die Pseudogetreide bieten den Vorteil, dass diese keine nennenswerten Mengen an Gluten beinhalten, sodass daraus hergestellte Teigwaren in der Regel als "glutenfrei" bezeichnet werden dürfen.

Die Auflagen, um ein Erzeugnis als "glutenfrei" oder mit "sehr geringer Glutengehalt" bewerben zu dürfen, können der Verordnung (EG) Nr. 41/2009 entnommen werden. Nachfolgend finden sich unter Punkten (1), (2) und (4) einige Absätze des Artikels 3 der genannten Verordnung:
(1) Für Menschen mit einer Glutenunverträglichkeit bestimmte Lebensmittel, die aus einer Zutat oder mehreren Zutaten aus Weizen, Roggen, Gerste, Hafer oder ihren Kreuzungen bestehen oder diese enthalten und die zur Reduzierung ihres Glutengehalts in spezieller Weise verarbeitet wurden, dürfen beim Verkauf an den Endverbraucher einen Glutengehalt von höchstens 100 mg/kg aufweisen.
(2) Bei der Kennzeichnung und Aufmachung der in Absatz 1 genannten Erzeugnisse und in der Werbung hierfür ist die Bezeichnung "sehr geringer Glutengehalt" zu verwenden. Weisen Lebensmittel beim Verkauf an den Endverbraucher einen Glutengehalt von höchstens 20 mg/kg auf, können sie mit der Bezeichnung "glutenfrei" versehen werden.
(4) Für Menschen mit einer Glutenunverträglichkeit bestimmte Lebensmittel, die aus einer Zutat oder mehreren Zutaten, welche Weizen, Roggen, Gerste, Hafer oder ihre Kreuzungen ersetzen, bestehen oder diese enthalten, dürfen beim Verkauf an den Endverbraucher einen Glutengehalt von höchstens 20 mg/kg aufweisen. Bei der Kennzeichnung und Aufmachung dieser Erzeugnisse und in der Werbung hierfür ist die Bezeichnung "glutenfrei" zu verwenden.

Demnach dürfen auch Teigwaren aus Getreidemehlen von Teff, Reis, Mais und Hirse als "glutenfrei" bezeichnet werden. Bei Teigwaren aus den weit verbreiteten und gut verfügbaren Getreidesorten Weizen, Roggen, Dinkel und Hafer ist dies jedoch nicht der Fall, da diese von Natur aus Gluten enthalten. Um aus diesen Getreidesorten gewonnenes erstes Pflanzensamenmehl, insbesondere Getreidemehl, zur Herstellung von Teigwaren nutzen zu können, welche mit "sehr geringer Glutengehalt" bezeichnet werden dürfen, wird der Anteil des ersten Pflanzensamenmehles, insbesondere Getreidemehles, in der Regel derart reduziert, dass die in der Verordnung (EG) Nr. 41/2009 genannten Grenzwerte von 100 mg/kg eingehalten werden. Hierzu kann sowohl eine Mischung mit ersten Pflanzensamenmehlen, insbesondere Getreidemehlen, aus glutenfreien Körnerfrüchten als auch ein besonders großer Anteil an zweitem Pflanzensamenmehl vorgesehen sein. Spielt der Glutengehalt der hergestellten Teigwaren hingegen nur eine untergeordnete Rolle, stellt sich der Einsatz von ersten Pflanzensamenmehlen, insbesondere Getreidemehlen, aus Weizen, Roggen, Dinkel und Hafer aufgrund der guten Verfügbarkeit als besonders vorteilhaft dar.

Mit Vorteil wird das zweite Pflanzensamenmehl mit einem Restölgehalt zwischen 5 Gew.-% und 35 Gew.-%, bevorzugt zwischen 6 Gew.-% und 10 Gew.-%, eingesetzt. Dadurch wird der Geschmack der erzeugten Teigwaren intensiviert. Dementsprechend können die hergestellten Teigwaren abhängig von der Art des zweiten Pflanzensamenmehles beispielsweise einen nussigen oder süßlichen Geschmack bekommen. Hierbei hängt eine Intensität des Geschmackes direkt proportional mit dem Restölgehalt des zweiten Pflanzensamenmehles zusammen. Zudem kann durch den Restölgehalt des zweiten Pflanzensamenmehles ein Zusammenkleben der Teigwaren bei und/oder nach deren Zubereitung auf effiziente Weise verhindert werden.

Bevorzugt ist vorgesehen, dass das zweite Pflanzensamenmehl im Wesentlichen durch ein Vermahlen von, insbesondere teilentölten, Kürbiskernen und/oder Hanfsamen erhalten wird. Dadurch weist das zweite Pflanzensamenmehl einen besonders hohen Proteingehalt auf. In der Regel werden die Kürbiskerne und/oder Hanfsamen geröstet, um deren Feuchtigkeitsgehalt zu reduzieren. Anschließend werden die Kürbiskerne und/oder Hanfsamen ausgepresst, sodass in diesen enthaltene Öle freigesetzt und gesammelt werden können. Der Rückstand, oftmals auch als Presskuchen oder Treber bezeichnet, besteht dabei aus teilentölten Kürbiskernen und/oder Hanfsamen. Diese können im weiteren Verlauf zu einem zweiten Pflanzensamenmehl vermahlen werden. Derartiges Pflanzensamenmehl weist für gewöhnlich einen besonders niedrigen Restölgehalt auf, sodass auch dessen Geschmacksintensität besonders niedrig sein kann. Zudem kann das erhaltene zweite Pflanzensamenmehl auf einfache Weise mit anderen Mehlen, insbesondere dem ersten Pflanzensamenmehl, vermischt und zu einem homogenen Teig vermengt werden.

Da ein Eiweiß: Kohlehydrat-Verhältnis von teilentölten Kürbiskernen und/oder Hanfsamen im Regelfall zwischen 5:1 und 20:1, bevorzugt aber zwischen 10:1 und 15:1, liegt, ergibt sich der Vorteil, dass bereits durch Zugabe geringer Anteile eine signifikante Änderung des Eiweiß: Kohlehydrat-Verhältnisses der erzeugten Teigwaren herbeigeführt werden kann. Vorzugsweise können die teilentölten Kürbiskerne und Hanfsamen auch vor oder nach dem Vermahlen miteinander vermischt werden, sodass als zweites Pflanzensamenmehl eine Mischung beider Pflanzensamenarten vorliegt. Zudem weisen Kürbiskerne einen sehr hohen Anteil an Magnesium auf und sind in der optischen Erscheinung grün gefärbt, wobei die Intensität der Farbe je nach Sorte variieren kann. Teilentölte Hanfsamen hingegen weisen eine hellbraune Farbe auf, wobei auch hier die Intensität der Farbe nach Sorte variieren kann. Vermahlene Rückstände von teilentölten Kürbiskernen werden für gewöhnlich als Kürbis- oder Kürbiskernmehl und jene der teilentölten Hanfsamen als Hanf- oder Hanfsamenmehl bezeichnet.

Es ist vorteilhaft, wenn die teilentölten Kürbiskerne und/oder Hanfsamen getrocknet werden. Hierdurch kann der Feuchtigkeitsgehalt der Kürbiskerne und/oder Hanfsamen auf einfache Weise reduziert werden. Entsprechend weist auch aus diesen erhaltenes zweites Pflanzensamenmehl einen geringeren Feuchtigkeitsgehalt auf, sodass ein Verklumpen der einzelnen Körner weitestgehend vermieden werden kann. Folglich kann durch den geringeren Feuchtigkeitsgehalt des zweiten Pflanzensamenmehles ein Zeitaufwand zur Bildung eines homogenen Teiges reduziert werden.

Die Aufgabe der Zusammensetzung wird dadurch gelöst, dass eine erfindungsgemäße Zusammensetzung aus höchstens 68 Gew.-% eines, bevorzugt kohlehydratreichen, ersten Pflanzensamenmehles, insbesondere Getreidemehles, und mindestens 32 Gew.-% eines eiweißreichen zweiten Pflanzensamenmehles besteht. Hierdurch ergibt sich der Vorteil, dass ein bloßes Vermengen der Zusammensetzung mit Wasser bereits ausreichend ist, um einen Teig zum Herstellen einer Teigware zu erzeugen. Daraus erhaltene Teigwaren weisen im Vergleich zu herkömmlicher Teigware einen erhöhten Eiweißanteil und gleichzeitig einen reduzierten Kohlehydratanteil auf. Zudem weichen mit einer solchen Zusammensetzung hergestellte Teigwaren nur unwesentlich vom Erscheinungsbild herkömmlicher Teigwaren, insbesondere Nudeln, ab. Letzteres wird dadurch erreicht, dass das zweite Pflanzensamenmehl dem ersten Pflanzensamenmehl, insbesondere Getreidemehl, beigemengt wird, wodurch ein homogener Teig entsteht, welcher im Wesentlichen analog zu herkömmlichen Teigzusammensetzungen verarbeitbar ist. Aus einem solchen Teig hergestellte Teigwaren können farbliche Unterschiede zu herkömmlichen Teigwaren aufweisen, wobei hierfür die Farbgebung des ersten Pflanzensamenmehles und/oder zweiten Pflanzensamenmehles einerseits und der Anteil des zweiten Pflanzensamenmehles andererseits entscheidend ist. Je intensiver die Färbung des zweiten Pflanzensamenmehles und je höher dessen Anteil an der Teigzusammensetzung, desto intensiver gefärbt erscheint die erhaltene Teigware. In der Regel ist der Anteil des ersten Pflanzensamenmehles, insbesondere Getreidemehles, an der Zusammensetzung größer als 0 Gew.-% und jener des zweiten Pflanzensamenmehles kleiner als 100 Gew.-%. Alternativ kann der Anteil des zweiten Pflanzensamenmehles jedoch auch derart erhöht sein, dass eine Zusammensetzung aus 100 Gew.-% des zweiten Pflanzensamenmehles vorliegt. Hiermit erhaltene Teigwaren sind für gewöhnlich analog zum zweiten Pflanzensamenmehl gefärbt und weisen, abhängig von der Sorte und/oder Art der Pflanzensamen, einen Kohlehydratanteil von weniger als 15 Gew.-%, vorzugsweise weniger als 10 Gew.-%, insbesondere weniger als 5 Gew.-%, auf.

Es hat sich bewährt, dass das erste Pflanzensamenmehl ein Getreidemehl ist und aus vermahlenen Körnerfrüchten, insbesondere jener von Süßgräsern, besteht. Dadurch kann der Glutengehalt der erhaltenen Teigwaren festgelegt werden. Soll ein Glutengehalt der erhaltenen Teigware reduziert oder gar unter den festgelegten Grenzwert für "glutenfreie" Produkte fallen, kann das Getreidemehl einen Anteil aus Quinoa, Amarant, Buchweizen, Teff, Reis, Mais und/oder Hirse enthalten oder zur Gänze aus einer oder mehreren dieser Getreidesorten bestehen.

Zweckmäßig ist es, wenn das zweite Pflanzensamenmehl im Wesentlichen aus vermahlenen, insbesondere teilentölten, Kürbiskernen und/oder Hanfsamen besteht. Hierdurch wird der Eiweißanteil der erhaltenen Teigware erhöht und der Kohlehydratanteil gleichzeitig gesenkt. Zudem kann durch das zweite Pflanzensamenmehl der Geschmack und die Farbgebung der Teigware beeinflusst werden.

Vorzugsweise weist das zweite Pflanzensamenmehl eine durchschnittliche Korngröße von kleiner gleich 1000 µm, bevorzugt kleiner als 500 µm, besonders bevorzugt kleiner als 300 µm, auf. Dadurch kann bei der Beimengung des zweiten Pflanzensamenmehles zum ersten Pflanzensamenmehl, insbesondere Getreidemehl, auf besonders schnelle und einfache Weise eine homogene Mischung erzielt werden. Im Regelfall weist das erste Pflanzensamenmehl, insbesondere Getreidemehl, eine durchschnittliche Korngröße von kleiner gleich 1000 µm auf, sodass erstes Pflanzensamenmehl und zweites Pflanzensamenmehl in einem ähnlichen Korngrößenbereich liegen. Hierdurch wird eine Homogenisierung der beiden Bestandteile weiter vereinfacht. Zudem geht mit der Homogenisierung in der Regel auch eine gleichmäßige Farb- und Geschmacksänderung der Teigware einher. Folglich wird durch die durchschnittliche Korngröße des ersten Pflanzensamenmehles und/oder zweiten Pflanzensamenmehles auch eine Bildung von konzentrierten Regionen innerhalb der Teigware auf effiziente Weise verhindert.

Entsprechend den vorstehend erläuterten Vorteilen besteht eine erfindungsgemäße Verwendung darin, eine erfindungsgemäße Zusammensetzung mit weiteren Bestandteilen zu einem Teig zu vermengen. Hierdurch kann eine Konsistenz und damit auch eine Formbarkeit des Teiges bestimmt werden. Je nach Verhältnis zwischen Zusammensetzung und den weiteren Bestandteilen kann der erhaltene Teig eine harte und formstabile oder weiche und leicht verformbare Konsistenz aufweisen, wobei die Art der Verarbeitung eine maßgebliche Rolle für die Wahl des Mischungsverhältnisses spielt.

Bevorzugt umfassen die weiteren Bestandteile Wasser, Salz und/oder Zucker. Dadurch kann der Geschmack der Teigwaren beeinflusst und eine Vielzahl von Marktsegmenten bedient werden. Die weiteren Bestandteile können grob in flüssige Bestandteile wie Wasser, Milch und/oder Eier und feste Bestandteile wie Salz und/oder Zucker eingeteilt werden. Dabei können feste Bestandteile bereits vor deren Vermengung mit der Zusammensetzung in flüssigen Bestandteilen aufgelöst werden. Während herkömmliche Teigwaren lediglich mit Wasser vermengt werden, können hierbei auch flüssige Bestandteile wie Eier, Milch oder andere Inhaltsstoffe tierischen Ursprungs, beispielsweise Sepia, zum Einsatz kommen. Darüber hinaus können aber auch Teigwaren hergestellt werden, welche den Auflagen für eine Kennzeichnung als "vegan" und/oder "laktosefrei" genügen. Hierzu wird auf den Zusatz von tierischen Produkten zur Veränderung des Erscheinungsbildes, des Geschmackes und/oder der Konsistenz verzichtet. Vorzugsweise ist die Vermengung der Zusammensetzung mit Wasser, Salz und/oder Zucker und ein darauffolgender Knetprozess aber ausreichend, um einen verarbeitbaren Teig und in weiterer Folge Teigware, insbesondere aber Nudeln, herzustellen.

In den folgenden Tabellen werden exemplarisch Nährwerttabellen einer erfindungsgemäßen Zusammensetzung dargestellt:

**Tabelle 1: Zusammensetzung mit Kürbiskernmehl**

| | Hartweilennudeln | Kürbiskernmehl | | Mittelwert Kürbiskemmehl | Mischungsverhältnis | | **68/32 Errechneter Mitteiwert 100g** | |
|---|---|---|---|---|---|---|---|---|
| | | | | | 68 | 32 | | |
| | | von | bis | | | | | |
| Energie kjoule | 1.502,00 | 1.600,00 | 1.700,00 | 1.650,00 | 1021,36 | 528,00 | **1.549,36** | kjoule |
| Fett | 1,3 | 8 | 15 | 11,5 | 0,88 | 3,68 | **4,56** | g |
| davon gesättigte Fettsäuren | 0,3 | 1,5 | 2,6 | 2,1 | 0,20 | 0,67 | **0,88** | g |
| Kohlenhydrate | 72 | 2,7 | 5,2 | 4 | 48,96 | 1,28 | **50,24** | g |
| davon Zucker | 3,6 | 1,6 | 2,2 | 1,9 | 2,45 | 0,61 | **3,06** | g |
| Ballaststoffe | 3,2 | 9,9 | 14,6 | 12,3 | 2,18 | 3,94 | **6,11** | g |
| Eiweiß | 12 | 55 | 65 | 60 | 8,16 | 19,20 | **27,36** | g |
| Salz | 0 | 1 | 3 | 2 | 0,00 | 0,64 | **0,64** | g |
| | | | | | | | | |
| **Reduktion Kohlehydrate** | 72 g | 30 % Reduktion = weniger 50,4 g | | | **unterschritten** | | **50,24** | |
| **Erhöhung Eiweiß** | 12 g | mindestens 20 % vom Gesamtbrennwert = 310 kjoule mindestens | | | | | | |
| | | 1 g Eiweiß = 17,1 kjoule x 27,36 g = 467 kjoule | | | **um 50% überschritten** | | **27,36** | |

**Tabelle 2: Zusammensetzung mit Hanfmehl**

| **Hartweizengrießnudeln mit Hanfpresskuchenmehl** | Hartweizennudeln | | Hanfmehl | | Mittelwert Hanfmehl | Mischungsverhältnis | | **68/32 Errechneter Mittelwert pro 100 g** | |
|---|---|---|---|---|---|---|---|---|---|
| | | | von | bis | | 68 | 32 | | |
| Energie | 1.502,0 | kjoule | 1.600,0 | 1.700,0 | 1.414,0 kjoule | 1021,36 | 452,48 | **1.473,84** | kjoule |
| Fett | 1,3 | g | 8,0 | 15,0 | 11,0 g | 0,88 | 3,5 | **4,40** | g |
| davon gesättigte Fettsäuren | 0,3 | g | 1,0 | 1,7 | 1,3 g | 0,20 | 0,4 | **0,62** | g |
| Kohlenhydrate | 72,0 | g | 2,7 | 4,5 | 3,7 g | 48,96 | 1,2 | **50,14** | g |
| davon Zucker | 3,6 g | | 2,8 | 4,0 | 3,4 g | 2,45 | 1,1 | **3,54 g** | |
| Ballaststoffe | 3,2 | g | 29,0 | 37,0 | 33,6 g | 2,18 | 10,8 | **12,93** | g |
| Eiweiß | 12,0 | g | 35,0 | 45,0 | 39,7 g | 8,16 | 12,7 | **20,86** | g |
| | | | | | | | | | |
| **Reduktion Kohlehydrate** | 72 g | | **30 % Reduktion = weniger 50,4 g** | | | **unterschritten** | | **50,10** | g |
| **Erhöhung Eiweiß** | 12 | g | mindestens 20 % vom Gesamtbrennwert = 310 kjoule mindestens | | | | | | |
| | | | 1 g Eiweiß = 17,1 kjoule x 20,9 g = 357 kjoule | | | **um 15 % überschritten** | | **20,90** | g |

## Patentansprüche

1. Verfahren zum Herstellen von Teigwaren, **dadurch gekennzeichnet, dass** höchstens 68 Gew.-% eines, bevorzugt kohlehydratreichen, ersten Pflanzensamenmehles, insbesondere Getreidemehles, und zumindest 32 Gew.-% eines eiweißreichen zweiten Pflanzensamenmehles, bezogen auf gesamt 100 Gew.-% dieser Bestandteile, sowie optional weitere Bestandteile zur Bildung eines Teiges vermischt werden.

2. Verfahren nach Anspruch 1, **dadurch gekennzeichnet, dass** das erste Pflanzensamenmehl und das zweite Pflanzensamenmehl durch ein Vermahlen von, insbesondere teilentölten, Pflanzensamen hergestellt werden.

3. Verfahren nach Anspruch 1 oder 2, **dadurch gekennzeichnet, dass** das erste Pflanzensamenmehl und das zweite Pflanzensamenmehl aus unterschiedlichen Pflanzensamen hergestellt werden.

4. Verfahren nach einem der Ansprüche 1 bis 3, **dadurch gekennzeichnet, dass** Getreidemehl als erstes Pflanzensamenmehl eingesetzt und durch ein Vermahlen von Körnerfrüchten, insbesondere jener von Süßgräsern, erhalten wird.

5. Verfahren nach einem der Ansprüche 1 bis 4, **dadurch gekennzeichnet, dass** das zweite Pflanzensamenmehl im Wesentlichen durch ein Vermahlen von, insbesondere teilentölten, Kürbiskernen und/oder Hanfsamen erhalten wird.

6. Verfahren nach einem der Ansprüche 1 bis 5, **dadurch gekennzeichnet, dass** das zweite Pflanzensamenmehl mit einem Restölgehalt zwischen 5 Gew.-% und 35 Gew.-%, bevorzugt zwischen 6 Gew.-% und 10 Gew.-%, eingesetzt wird.

7. Zusammensetzung zum Herstellen von Teigwaren, bestehend aus höchstens 68 Gew.-% eines, bevorzugt kohlehydratreichen, ersten Pflanzensamenmehles, insbesondere Getreidemehles, und mindestens 32 Gew.-% eines eiweißreichen zweiten Pflanzensamenmehles.

8. Zusammensetzung nach Anspruch 7, **dadurch gekennzeichnet, dass** das erste Pflanzensamenmehl ein Getreidemehl ist und aus vermahlenen Körnerfrüchten, insbesondere jener von Süßgräsern, besteht.

9. Zusammensetzung nach Anspruch 7 oder 8, **dadurch gekennzeichnet, dass** das zweite Pflanzensamenmehl im Wesentlichen aus vermahlenen, insbesondere teilentölten, Kürbiskernen und/oder Hanfsamen besteht.

10. Zusammensetzung nach einem der Ansprüche 7 bis 9, **dadurch gekennzeichnet, dass** das zweite Pflanzensamenmehl eine durchschnittliche Korngröße von kleiner gleich 1000 µm, bevorzugt kleiner als 500 µm, besonders bevorzugt kleiner als 300 µm, aufweist.

11. Verwendung einer Zusammensetzung nach einem der Ansprüche 7 bis 10 zum Herstellen von Teigwaren, wobei die Zusammensetzung mit weiteren Bestandteilen zu einem Teig vermengt wird.

12. Verwendung nach Anspruch 11, wobei die weiteren Bestandteile Salz und/oder Zucker umfassen.
